(19) Europäisches Patentamt
European Patent Office
Office européen des brevets

(11) **EP 2 314 890 B1**

## (12) EUROPÄISCHE PATENTSCHRIFT

(45) Veröffentlichungstag und Bekanntmachung des Hinweises auf die Patenterteilung:
**02.09.2015 Patentblatt 2015/36**

(51) Int Cl.:
***F16B 19/08*** *(2006.01)*

(21) Anmeldenummer: **10010120.3**

(22) Anmeldetag: **22.09.2010**

(54) **Halbhohlstanzniet**

Half hollow punch rivet

Rivet auto-poinçonneur semi-creux

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **22.10.2009 DE 102009050342**

(43) Veröffentlichungstag der Anmeldung:
**27.04.2011 Patentblatt 2011/17**

(73) Patentinhaber: **Audi AG**
**85045 Ingolstadt (DE)**

(72) Erfinder: **Hornbostel, Norbert**
**74388 Talheim (DE)**

(74) Vertreter: **Geissler, Manfred**
**AUDI AG**
**Patentabteilung**
**85045 Ingolstadt (DE)**

(56) Entgegenhaltungen:
**EP-A1- 1 387 093        EP-B1- 2 024 651**
**DE-A1- 19 648 231       DE-A1- 19 909 821**
**DE-B3-102006 028 537    US-A- 1 503 859**
**US-A- 4 130 369**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Blechverbindung mittels Halbhohlstanznieten, die einen Nietkopf, einen sich daran anschließenden, mit einer konzentrisch angeordneten Ausnehmung versehenen und in einen als Schneide dienenden Nietfuß mündenden Nietschaft sowie eine gerundet ausgebildete Nietkopfunterseite aufweisen.

Es ist bekannt, zwei oder mehrere Bleche mittels der Stanzniettechnik miteinander dauerhaft zu verbinden. Diese Technologie ist beispielsweise bereits durch "Stanznieten ist zukunftsträchtig in der Blechverarbeitung", Bänder, Bleche Rohre, Ausgabe 5, 1991, Seite 94 ff bekannt geworden. Aus dieser Publikation ist insbesondere bekannt, dieses Hilfsfügeteil entweder als Vollniet oder als Halbhohlniet auszugestalten. Die vorliegende Erfindung betrifft ein als Halbhohlniet ausgestaltetes Hilfsfügeteil. Es wird dabei in einem ununterbrochenen Fügevorgang zunächst durch ein stempelseitiges Blech, beim Mehrlagenstanznieten noch durch weitere Bleche, gedrückt, um in einem matrizenseitigen Blech plastisch verformt zu werden. Der während des Stanzvorganges abgetrennte Stanzbutzen verbleibt hierbei im Schaft der Halbhohlniets.

Neben eingehender Behandlung in der Fachliteratur haben Halbhohlstanzniete auch mannigfaltig Eingang in die Patentliteratur gefunden. Im Wesentlichen geht es dabei darum, für zum Teil unterschiedliche Einsatzzwecke geeignete Nietgeometrien zu finden.

So beschreibt die DE 10 2005 020 416 B4 einen Halbhohlstanzniet mit einem eine Nietkopfunterseite aufweisenden Nietkopf, wobei der Verlauf der Nietkopfunterseite einen ersten kleineren Unterkopfradius und in Richtung zum Nietkopf einen zweiten größeren Unterkopfradius umfasst, der etwa dem 3-bis 4-fachen des ersten Unterkopfradius entspricht.

In der EP 0 720 695 B2 wird eine selbststanzende Befestigungsvorrichtung beschrieben, bei der ein Nietschaft in der Weise ohne Bildung eines Hinterschnittes in die Unterseite eines Nietkopfes übergeht, dass die Nietkopfunterseite im Wesentlichen durch eine Rundung gebildet wird, wobei der Grund der Ausnehmung ebenfalls gerundet ist. Ziel ist hier insbesondere, dass die hergestellte Nietverbindung bezüglich ihrer Festigkeit hohen Anforderungen genügen kann und dass die Werkstückoberfläche im Bereich der Nietverbindung nicht nachhaltig beeinträchtigt wird.

Insbesondere für die Zwecke des Verbindens von Leichtmetall- Fügeteilen ist in der EP 0 833 063 B1 ein Halbhohlstanzniet aus Leichtmetall beschrieben und es werden dort verschiedene Vorschläge zu dessen geometrischer Ausgestaltung gemacht.

Weitere dahingehende Vorschläge finden sich in der EP 1 387 093 A1, die speziell auf Aluminiumblechverbindungen abstellt, die mittels einer Halbhohlstanzniet aus Aluminium oder einer Aluminiumlegierung verbunden werden. Für den Kopfdurchmesser und den Schaftdurchmesser der Aluminium-Halbhohlstanzniet werden Werte von 7,8 mm (Kopfdurchmesser) und 6 mm (Schaftdurchmesser) angegeben, so dass der Kopfdurchmesser exakt dem 1,3-fachen des Schaftdurchmessers entspricht. Die Dicke T2 (Schaftaußendurchmesser D1 - Ausnehmungsdurchmesser D2) soll 25 bis 45% des Schaftaußendurchmessers D1 betragen, während die Schneidenbreite T1 zwischen 0,2 und 0,6 mm (3 bis 10% des Schaftaußendurchmessers D1) betragen soll.

Weiter sei noch auf die DE 44 19 065 A1 verwiesen, in der eine selbststanzende Befestigungsvorrichtung für sich überlappende Blechbauteile beschrieben wird, deren Wandstärken unterschiedlich sind.

Die Qualität der Stanznietverbindung wird entscheidend beeinflusst von der geometrischen Ausbildung des Halbhohlstanzniets sowie den Materialeigenschaften der Fügeteile sowie des Niets. Entscheidendes Kriterium ist auch das Aufspreizverhalten des Nietschaftes. Um bei hoch- und höchstfesten Stählen ein vorzeitiges unerwünschtes Aufspreizen zu vermeiden, ist gemäß der EP 1 229 254 B1 vorgesehen, den Nietfuß stumpf auszubilden. in diesem Dokument werden des weitern Vorschläge für vorteilhafte Bemaßungen von Nietfuß, Nietschaft, Schafthohlraum, Nietkopf u.s.w. gemacht. Es liegt dabei die Überlegung zugrunde, dass zur Verwirklichung eines angestrebten Leichtbaus neben der Verwendung von Leichtmetallen auch hoch- und höchstfeste Stahlbleche herangezogen werden können. Aufgrund der guten Festigkeitseigenschaften besteht dann nämlich die Möglichkeit, diese Bleche im Vergleich zu Blechen aus normalem Stahl wesentlich dünner und damit leichter auszubilden.

Weitere Nietgeometrien in Zusammenhang mit dem Verbinden von höherfesten bis ultrahochfesten Stahlblechen sind in der EP 2 024 651 B1 beschrieben. Konkret wird hier für eine Halbhohlstanzniet ein Verhältnis des Kopfdurchmessers zum Außendurchmesser des Schaftes im Bereich von 1,35 bis 1,47:1 vorgeschlagen. In einem konkreten Beispiel wird ein Außendurchmesser $D_o$ von 5,5 mm angegeben und ein Kopfdurchmesser von 7,75 mm, was letztendlich einem Verhältnis von ungefähr 1,4:1 entspricht. Mit einem derartigen Verhältnis von Kopfdurchmesser zu Schaftdurchmesser wird jedoch bei Blechverbindungen mit hoch- und höchstfesten Stählen ein relativ großer, unerwünschter Kopfspalt erzeugt und muss zudem eine relativ hohe Setzkraft beim Eindringen des Nietkopfes in den hochfesten Stahl des oberen Blechteils aufgebracht werden.

Demgegenüber ist es Aufgabe der vorliegenden Erfindung, eine Verbindung vorzusehen, mittels der beim Verbinden von hoch- und höchstfesten Stählen mittels einer Halbhohlstanzniet ein möglichst geringer Kopfspalt erzeugt wird und zudem die aufzuwendende Setzkraft beträchtlich reduziert werden kann.

Die Lösung dieser Aufgabe gelingt mit den Merkmalen des Patentanspruches 1.

Durch die vorgegebene Obergrenze im Verhältnis von Kopfdurchmesser zu Schaftdurchmesser sowie auch durch die gerundet ausgebildete Nietkopfunterseite kann beim Verbinden von hoch- und höchstfesten Stählen ein möglichst geringer Kopfspalt erzeugt werden. Auch lässt sich die aufzuwendende Setzkraft beim Eindringen des Nietkopfes in den hochfesten Stahl des oberen Blechteiles beträchtlich reduzieren. Das Stauchverhalten des Nietes wird optimiert und Rissbildung innerhalb des Nietes kann weitgehend vermieden werden. Als positiver Nebeneffekt beim Zuführen eines erfindungsgemäßen Halbhohlstanznietes zum Setzwerkzeug ist anzumerken, dass dieser Niet auch bei üblichen Längen (zwischen 4 und 10 mm) für die Anwendung im Dünnblechbereich (Karosseriebau) entlang seiner Längsachse prozesssicher in einem zylindrischen Schlauch vom Vorratsbehälter bis zum Setzstempel zugeführt werden kann. Auch das übliche Zuführen im Profilquerschnitt ist möglich.

Vorteilhafte Ausgestaltungen der Erfindung sind in den Unteransprüchen beansprucht.

Ein Ausführungsbeispiel der Erfindung wird im Folgenden anhand der Zeichnung näher erläutert. Es zeigen jeweils in schematischer Darstellung:

Fig. 1     eine teilgeschnittene Ansicht eines Halbhohlstanznietes und

Fig. 2     eine im Maßstab vergrößerte Teildarstellung eines Nietfußes gemäß Kreislinie II in Fig.1

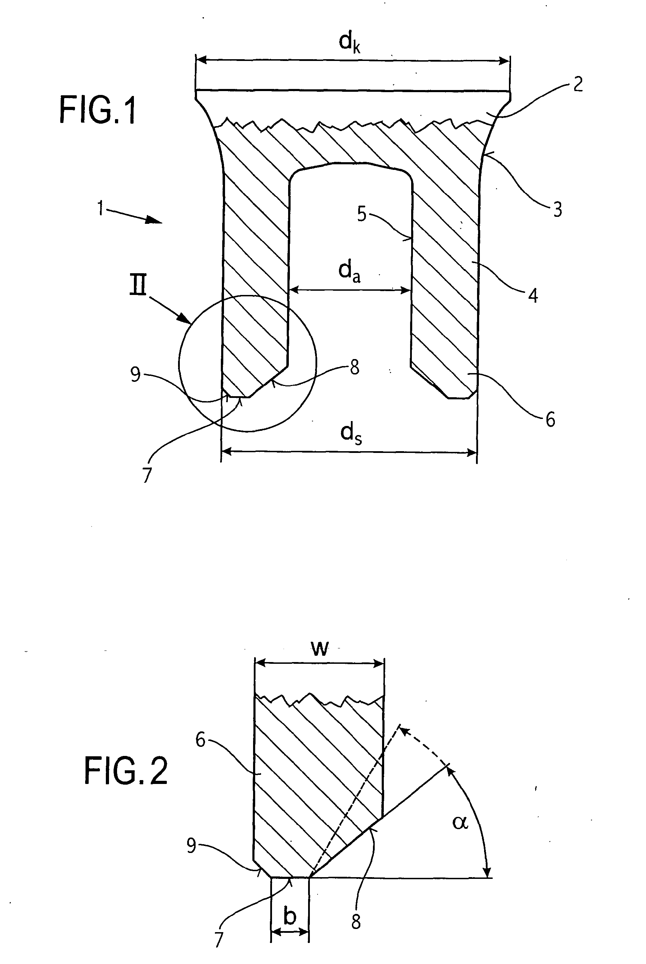

Ein in Fig. 1 gezeigter Halbhohlstanzniet 1 besteht aus einem Stahlwerkstoff und seine Zugfestigkeit liegt im Bereich eines üblichen Stahl- Halbhohlstanznietes, also zwischen 1200 und 1800 N/mm$^2$ und kann Werte von bis zu 2000 N/mm$^2$ erreichen. Die Härte beträgt etwa 550 HV 0,1. Sie kann aber auch Abweichungen von diesem Wert erfahren. Der Halbhohlstanzniet 1 eignet sich insbesondere dazu, (stempelseitig) höherfeste bis ultrahochfeste Stähle (insbesondere ≥1000-1700 N/mm$^2$ Zugfestigkeit) mit (matrizenseitig) Aluminium oder fließfähigen Werkstoffen zu verbinden. Andererseits können matrizenseitig auch höherfeste Stahlwerkstoffe bis etwa 1000 N/mm$^2$ zum Einsatz kommen. Aber auch alle anderen Materialien, die für den Karosseriebau geläufig sind, z. B. faserverstärkte Kunststoffe, Magnesium etc., können mit dem Halbhohlstanzniet 1 verbunden werden, was jedoch nicht erfindungsgemäß ist.

Ebenso denkbar sind Mehrblechverbindungen mit stempelseitig fließfähigen Material und einem oder mehreren höherfesten bis ultrahochfesten Stahlteilen in der Mitte. Genauso ist es denkbar ein höherfestes oder ultrahochfestes Stahlteil stempelseitig anzuordnen und mehrere fließfähige Werkstoffe auf der Matrizenseite. Weiterhin können alle genannten Paarungen ergänzend mit Klebstoff zum Einsatz kommen. Der Halbhohlniet 1 kann aufgrund seiner hohen Stabilität für Anwendungen eingesetzt werden, wo sehr sprödes Material (z. B. naturharter Alu-Druckguß oder Alu-Strangpresslegierungen) auf der Matrizenseite angeordnet ist und als Matrizengeometrie lediglich flache Kugelmatrizen eingesetzt werden können.

Der Halbhohlstanzniet 1 besteht aus einem Nietkopf 2, einem über eine gerundete (gleich bleibender Radius) Nietkopfunterseite 3 sich anschließenden Nietschaft 4, einer konzentrisch im Nietschaft 4 vorhandenen Ausnehmung 5 und einem Nietfuß 6. Letzterer bildet, weil er das stempelseitige Blech vollends durchdringt und in das matrizenseitige Blech eindringt, eine Schneidengeometrie, umfassend eine Schneidenfläche 7 mit einer sich daran anschließenden, in die Ausnehmung 5 einmündenden Anfasung 8. Optional kann, der Anfasung 8 gegenüberliegend, eine weitere kleine Fase 9 vorgesehen sein.

Kopfdurchmesser $d_k$, Schaftdurchmesser $d_s$, Wandstärke w des Nietschaftes 4, Schneidenbreite b, durch die Anfasung 8 entstehender Schneidenwinkel $\alpha$ und Ausnehmungsdurchmesser $d_a$ weisen beim Halbhohlstanzniet 1 bevorzugt folgende Abmessungen auf:

$$d_k \leq 1,3 \times d_s,$$

$$d_a \leq 0,5 \times d_s, \text{ insbes. } d_a \leq 0,45 \times d_s$$

$$0,1 \times d_s \leq b \leq 0,2 \times d_s,$$

$$40° \leq \alpha \leq 60°, \text{ bei } d_a \leq 0,45 \times d_s \text{ auch bis } 75°$$

Erfindungsgemäß gilt zwischen der Wandstärke w des Nietschaftes und einer Schneidenbreite b:

$$0,4 \times w \leq b \leq 0,7 \times w$$

Als besonders geeignete Abmessungen haben sich bei Versuchen ergeben: $d_a$ = 3,2 mm und $d_s$ = 6,5 mm. Es zeigt sich nämlich, dass der große Schaftdurchmesser und der dazu passende Innendurchmesser sich positiv auf die Einlagerung des Stanzbutzens in der Verbindung auswirken. Der Stanzbutzen kann auf diese Weise sichelförmig eingelagert werden.

Eine vorteilhafte Weiterbildung der Erfindung besteht darin, dass der Halbhohlstanzniet 1, d. h. die Ausnehmung 5, vor dem Setzprozeß mit einem weitgehend inkompressiblen Material gefüllt werden könnte, z. B. einem selbstaushärtenden Klebstoff. Die Füllung des Nietes hat positive Eigenschaften hinsichtlich des Einlagerns des Stanzbutzens in der Verbindung. Der Niet kann spreizen, versucht dann aber nicht, den Stanzbutzen in die Bohrung zu drücken.

## Patentansprüche

1.  Verbindung eines höherfesten bis ultrahochfesten Stahlbleches mit einem Blech aus Aluminium oder einem fließfähigen Werkstoff oder aus einem höherfesten Stahlwerkstoff bis 1000 N/mm$^2$ mittels einer Halbhohlstanzniet aus einem Stahlwerkstoff, die einen Nietkopf, einen sich daran anschließenden, mit einer konzentrisch angeordneten Ausnehmung versehenen und in einen als Schneide dienenden Nietfuß mündenden Nietschaft sowie eine gerundet ausgebildete Nietkopfunterseite aufweist, wobei zwischen Kopfdurchmesser $d_k$ und Schaftdurchmesser $d_s$ der Halbhohlstanzniet gilt: $d_k \leq 1,3 \times d_s$ und wobei zwischen einer Wandstärke w des Nietschaftes und einer Schneidenbreite b gilt: $0,4 \times w \leq b \leq 0,7 \times w$.

2.  Verbindung nach Anspruch 1, **dadurch gekennzeichnet, dass** zwischen Ausnehmungsdurchmesser $d_a$ und Schaftdurchmesser $d_s$ der Halbhohlstanzniet gilt: $d_a \leq 0,5 \times d_s$, insbesondere $d_a \leq 0,45 \times d_s$.

3.  Verbindung nach Anspruch 2, **gekennzeichnet durch** einen Ausnehmungsdurchmesser $d_a$ = 3,2 mm und einen Schaftdurchmesser $d_s$ = 6,5 mm der Halbhohlstanzniet.

4.  Verbindung nach einem der Ansprüche 1 bis 3, **dadurch gekennzeichnet, dass** die Ausnehmung (5) der Halbhohlstanzniet mit einem weitgehend inkompressiblen Medium, insbesondere einem selbstaushärtenden Klebstoff, gefüllt ist.

5.  Verbindung nach einem der Ansprüche 1 bis 4, **dadurch gekennzeichnet, dass** die Verbindung eine Mehrblechverbindung mit einem oberseitigen Blech aus einem fließfähigen Material und einem oder mehreren höherfesten bis ultrahochfesten Stahlblechen in der Mitte ist.

6.  Verbindung nach einem der Ansprüche 1 bis 4, **dadurch gekennzeichnet, dass** die Verbindung ein oberseitiges höherfestes bis ultrahochfestes Stahlblech aufweist, das mittels der Halbhohlstanzniet mit mehreren aus einem fließfähigen Werkstoff hergestellten Blechen verbunden ist.

## Claims

1.  Connection of a high-strength to ultra-high-strength steel sheet to a sheet made of aluminium or a free-flowing material or of a high-strength steel material up to 1000 N/mm$^2$ by means of a semi-tubular punch rivet made of a steel material, which rivet comprises a rivet head, a rivet shaft which is connected to said rivet head, is provided with a concentrically arranged recess, and opens into a rivet foot acting as a cutting edge, and also comprises a rounded rivet-head underside; wherein between a head diameter $d_k$ and a shaft diameter $d_s$ of the semi-tubular punch rivet $d_k \leq 1.3 \times d_s$ and wherein between a wall thickness w of the rivet shaft and a cutting edge width b $0.4 \times w \leq b \leq 0.7 \times w$.

2.  Connection according to claim 1, **characterised in that** between a recess diameter $d_a$ and the shaft diameter $d_s$ of the semi-tubular punch rivet $d_a \leq 0.5 \times d_s$, in particular $d_a \leq 0.45 \times d_s$.

3.  Connection according to claim 2, **characterised by** a recess diameter $d_a$ = 3.2 mm and a shaft diameter $d_s$ = 6.5 mm of the semi-tubular punch rivet.

4.  Connection according to any of claims 1 to 3, **characterised in that** the recess (5) of the semi-tubular punch rivet is filled with a generally incompressible medium, in particular a self-hardening adhesive.

**5.** Connection according to any of claims 1 to 4, **characterised in that** the connection is a multiple-sheet connection comprising an upper sheet made of a free-flowing material and one or more high-strength to ultra-high-strength steel sheets in the centre.

**6.** Connection according to any of claims 1 to 4, **characterised in that** the connection comprises an upper high-strength to ultra-high-strength steel sheet which is connected to a plurality of sheets made of a free-flowing material by means of the semi-tubular punch rivet.

**Revendications**

**1.** Jonction d'une tôle d'acier très solide à ultra solide avec une tôle d'aluminium ou d'un matériau fluide ou d'un matériau à base d'acier très solide jusqu'à 1000 n/mm$^2$ au moyen d'un rivet auto-perforant semi-creux constitué d'un matériau à base d'acier, qui présente une tête de rivet, une tige de rivet qui s'y raccorde, qui présente un évidement aménagé concentriquement et débouchant sur un pied de rivet servant de tranchant, ainsi qu'une face inférieure de la tête de rivet à conformation arrondie, dans laquelle il y a entre le diamètre $d_k$ de la tête et le diamètre $d_s$ de la tige du rivet auto-perforant semi-creux la relation $d_k \le 1,3 \times d_s$ et dans laquelle il y a entre une épaisseur de paroi w de la tige de rivet et une largeur b du tranchant la relation $0,4 \times w \le b \le 0,7 \times w$.

**2.** Jonction selon la revendication 1, **caractérisée en ce qu'**il y a entre le diamètre $d_a$ de l'évidement et le diamètre $d_s$ de la tige du rivet auto-perforant semi-creux la relation $d_a \le 0,5 \times d_s$, en particulier $d_a \le 0,45 \times d_s$.

**3.** Jonction selon la revendication 2, **caractérisée par** un diamètre $d_a$ = 3,2 mm de l'évidement et un diamètre $d_s$ = 6,5 mm de la tige du rivet auto-perforant semi-creux.

**4.** Jonction selon quelconque des revendications 1 à 3, **caractérisée en ce que** l'évidement (5) du rivet auto-perforant semi-creux est rempli d'un milieu largement incompressible, en particulier un adhésif auto-durcissant.

**5.** Jonction selon l'une quelconque des revendications 1 à 4, **caractérisée en ce que** la jonction est une jonction de tôles multiples avec une tôle supérieure formée d'un matériau fluide et d'une ou plusieurs tôles d'acier très solide à ultra solide au centre.

**6.** Jonction selon l'une quelconque des revendications 1 à 4, **caractérisée en ce que** la jonction présente une tôle d'acier supérieure très solide à ultra solide, qui est jointe à plusieurs tôles constituées d'un matériau fluide au moyen du rivet auto-perforant semi-creux.

FIG.1

$d_k$

2

3

1

5

$d_a$

4

II

9

8

7

$d_s$

6

FIG.2

w

6

9

8

7

b

α

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005020416 B4
- EP 0720695 B2
- EP 0833063 B1
- EP 1387093 A1
- DE 4419065 A1
- EP 1229254 B1
- EP 2024651 B1

**In der Beschreibung aufgeführte Nicht-Patentliteratur**

- Stanznieten ist zukunftsträchtig in der Blechverarbeitung. 1991, 94 ff